# EUROPÄISCHE PATENTANMELDUNG

(11) **EP 2 150 047 A1**
(43) Veröffentlichungstag der Anmeldung: **03.02.2010**
(21) Anmeldenummer: 08013601.3
(22) Anmeldetag: 29.07.2008
(51) Int. Cl.: H04N 7/00, H04N 5/44

(54) **Vorrichtung und Verfahren zur verbesserten Darstellung von Zusatzinhalten**

(71) Anmelder: MoreTV Broadcasting GmbH, 20097 Hamburg (DE)
(72) Erfinder: Jenzowsky, Stefan, 14167 Berlin (DE); Yom, Christine, 22305 Hamburg (DE)

(57) **Zusammenfassung**

Die Erfindung betrifft eine Vorrichtung und ein dazugehöriges Verfahren, bei der die vorgegebenen Bildschirmauflösung und Darstellungsskalierungen von audiovisuellen Inhalten, wie z.B. den bekannten 4:3- oder 16:9-Formaten, neu skaliert werden. Der Zuschauer musste sich vor der Neuskalierung dabei häufig mit sogenannten "schwarzen Balken" abfinden - eine optische unästhetische und eine graphisch-inhaltlich nicht genutzte Fläche des Bildschirms. Durch die neue Vorrichtung und das verbesserte Verfahren kann die Neuskalierung den Bildschirm oder den Display mit Zusatzinhalten ausgefüllt werden, die den individuellen Wünschen des Zuschauers entsprechen.

## Beschreibung

Funk- und Fernsehprogramme sowie weitere audiovisuelle Inhalte erreichen ihre Zuschauer bzw. Zuhörer über eine Vielzahl von Kommunikationswegen. Neben terrestrischem und Satellitenempfang sowie Zugang über Kabelnetze gewinnt die Nutzung von Kommunikations-Datennetzen, wie beispielsweise Festnetz, Mobilfunknetz oder Internet für die Verbreitung der Programmangebote, zunehmend an Bedeutung. Der Zuschauer bzw. Zuhörer kann somit fast überall und auf beliebigen Zugangswegen an Funk- und Fernsehprogramme und audiovisuelle Inhalte gelangen.

Diese audiovisuellen Inhalte (bspw. Kino- und Spielfilme) werden in verschiedenen vorgegebenen Bildschirmauflösungen und Darstellungsskalierungen, wie z.B. den bekannten 4:3- oder 16:9-Formaten wiedergegeben. Der Zuschauer muss sich dabei häufig mit sogenannten "schwarzen Balken" abfinden - eine optische unästhetische und eine graphisch-inhaltlich nicht genutzte Fläche des Bildschirms. Die dargestellten Inhalte bzw. ihre Abbildungen sollen in ihrem bisherigen Auflösung, ihrer Darstellungsskalierung und ihrer Aspect Ratio in einer einheitlichen Form einer großen Masse an Konsumenten genügen - und sind folglich nicht immer auf die Bedürfnisse und Ausstattung des individuellen Konsumenten und seiner Empfangs- und Darstellungsgeräte zugeschnitten.

Die Notwendigkeit der optischen Gestaltung und der Weiterentwicklung der graphischen und inhaltlichen Darstellung von Displays von/auf verschiedenen Endgeräten wird durch die zunehmende Konvergenz verschiedener Medienträger u.ä. zunehmend wichtiger. So ist z.B. heute das Fernsehgerät mit dem Computer hinsichtlich ihrer technologischen und distributorischen Möglichkeiten weitgehend ähnlich - und häufig sogar austauschbar. So können z.B. Video-on-Demand-Wiedergaben sowohl über den Fernseher oder einen TV-Videomonitor oder TV-Projektor (bspw. mittels einer Set-Top-Box oder einen digitalen Videorekorder / PVR), als auch über einen PC oder ein ähnliches Gerät z.B. via Internet auf einem Computermonitor ausgegeben werden - oder die selben Video-on-Demand-Inhalte bspw. auch auf einem Mobiltelefon wiedergegeben werden. Jedoch weisen diese Geräte häufig unterschiedliche Auflösungen und Wiedergabeformate sowie unterschiedliche Darstellungsskalierungen / Aspect Ratios auf. Dadurch resultiert eine nicht genutzte Fläche auf dem wiedergebenden Endgerät, die sinnvoll genutzt und mit relevanten Inhalten gefüllt werden kann.

Sogenanntes "Hybrid TV" (bei dem Broadcast- und Internetsignale im Wiedergabegerät gemischt werden) sowie IPTV ermöglichen es zunehmend, Zusatzinformationen (etwa via IP-Verbindung oder aus dem Internet) zusätzlich zum Programminhalt anzubieten und damit z.B. eine direkte des Fernsehzuschauers zu ermöglichen.

Durch Entwicklungen wie Hybrid-TV und IPTV gibt es heute und verstärkt in Zukunft Anforderungen, zusätzliche Inhalte mit audiovisuellen Inhalten (etwa Video- und Fernsehinhalten) anzuzeigen. Neben Diensten, die z.B. vertiefende Inhalte und weiterführende Inhalte anbieten, sind insbesondere auch kontextsensitive Inhalte für den Nutzer relevant und sinnvoll mit dem Programmangebot nutz- und denkbar. Auch werbliche Inhalte, wie z.B. Bannerwerbung können, insbesondere durch die so geschaffene Möglichkeit zur Gegenfinanzierung der Produktions- Einkaufs- und Darbietungskosten sinnvoll mit dem Programm angeboten werden. Mehrere Dienstleister weltweit (wie z.B. die britische Sky-Gruppe) bieten z.B. derartige programmbegleitende Zusatzinformationen an.

Ein Nachteil der bisherigen Darstellung programmbegleitender Zusatzinformationen besteht u.a. darin, dass die Darstellung solcher Zusatzinformation einen Teil des Programmangebots überlagert bzw. verdeckt.

Ein weiterer Nachteil der bisherigen Darstellung von programmbegleitenden oder inhaltsbegleitenden Zusatzinformationen besteht darin, dass eine derartige Überdeckung bzw. Überlagerung nicht immer ohne die Klärung von Sende-, Eigentums- und insbesondere Urheberrechtsfragen realisierbar ist, da ja oft ein Teil des ursprünglichen Bildes überlagert oder ausgeblendet wird, was ggf. nicht ohne Zustimmung der Inhaber von Modifikations- oder Urheberrechte realisierbar ist. In der Praxis ist dies bei der Vielzahl von in schneller Abfolge angebotenen audiovisuellen Inhalten (z.B. für mehrere Sender im zeitlich linearen Fernsehen) kaum durchführbar. Je nach Rechtslage kann dies dazu führen, dass z.B. bestimmte Überlagerungen und Überdeckungen durch Zusatzinformationen nicht ohne vorherige Zustimmung des Rechteeigners oder auch des Urhebers durchführbar sind. Dies schränkt in der Praxis heute die Möglichkeit eines Diensteanbieters oder eines Anbieters von technischen Zusatzgeräten, wie z.B. Set-Top-Boxen oder Videorekordern (PVR / DVR), zusätzliche programmbegleitende Zusatzinformationen oder kontextuelle interaktive begleitende Angebote zu machen (wie z.B. eine Sportwette passend zum Programm auf dem Fernsehschirm anzubieten), stark ein.

Ein Vorteil der vorliegenden Erfindung besteht in der Integration interaktiver und multimedialer Funktionalitäten an für den Nutzer und den Urheber und Sender bislang nicht mit Informationen belegter Stelle des Wiedergabegerätes (z.B. des Bildschirms). Dies verbessert u.a. die Sehqualität und die Usability und eröffnet gleichzeitig die Möglichkeit für den Konsumenten und für den Diensteanbieter, relevante Zusatzdienste mit bzw. neben den laufenden audiovisuellen Inhalten zu Nutzen bzw. anzubieten.
Ein weiterer Vorteil der Erfindung besteht in der verbesserten Personalisierbarkeit des Fernseherlebnisses durch die Möglichkeit zur Interaktion, z.B. dazu, zeitgleich sich eine Sportart, wie Boxen, anzuschauen und eine Wette via Internet abzuschließen.

Die Erfindung bringt den weiteren Vorteil mit sich, dass die im Volksmund bekannten "schwarze Balken" nicht mehr starr auf dem Bildschirm oder Display verharren und je nach Wunsch und Art des Verfahrens, diese Balken sich verschieben lassen. Diese "schwarze Fläche" kann nach links, rechts, oben oder unten - evtl. auch vergrößert oder verkleinert werden und dann z.B. für weitere Informationen, Sendungsinhalten oder andere Zusatzdienste wie z.B. TV-zentrische Dienstleistungen, AV-Inhalte oder TV-Service genutzt werden.

Die Erfindung bringt den Vorteil mit sich, dass Inhalte aus verschiedenen Kommunikations-Datennetzen ohne Überlagerung oder Aus- bzw. Überblendung zusammengefügt werden können, wie z.B. aus dem Internet und aus dem klassischen Fernsehprogramm über Kabel oder Satellit.

Die Erfindung bringt den Vorteil mit sich, dass die beschriebe Anordnung und das beschriebene Verfahren eine individuelle Nutzung ermöglicht. So kann z.B. eine Reisesendung im Fernsehprogramm verfolgt werden und zugleich hat der Zuschauer die Möglichkeit sich via Internet eine Reise dorthin zu buchen oder sich an einem Gewinnspiel zu beteiligen.

Ein weiterer Vorteil der Erfindung besteht darin, dass die Bildflächen von ihrer Starrheit befreit werden und zur individuellen Nutzung und verbesserten Befriedigung von persönlichen Bedürfnissen von Endnutzern ,freigegeben' werden.

Aufgabe der Erfindung ist es, eine Vorrichtung und ein dazugehöriges Verfahren für eine verbesserte Wiedergabe von Inhalten und ihrer Darstellung anzugeben, die eine verbesserte graphische und optische Gestaltung wie auch eine verbesserte individuelle Nutzung der Bildfläche von Endgeräten, wie z.B. auf Bildschirme und Displays ermöglicht.

Hierbei wird u.a. die Fläche der Displays in ihrer optischen Ausgestaltung verbessert genutzt - und in ihrer ästhetischen Anmutung wie auch in dem Informationsgehalt besser ausgeschöpft.

Die Erfindung beschreibt eine verbesserte Anordnung und ein verbessertes Verfahren zur Erkennung und Nutzung von bestehenden inhaltsfreien Flächen, die bei der Darstellung unterschiedlicher Darstellungsskalierungen, Aspect Ratios oder Bildauflösungen von Inhalt und Wiedergabegerät auftreten können.

Desweiteren beschreibt die Erfindung eine verbesserte Anordnung und ein verbessertes Verfahren zur Schaffung solcher inhaltsfreier Flächen, wenn diese nicht vorhanden sind oder sich nicht durch unterschiedliche Darstellungsskalierungen, Aspect Ratios oder Bildauflösungen ergeben, durch geeignete Mechanismen der Änderung von Parametern wie Darstellungsskalierung, Aspect Ratio, Bildauflösung, Stauchung, Streckung, oder weiteren.

Desweiteren beschreibt die Erfindung eine verbesserte Anordnung und ein verbessertes Verfahren, dass eine gezielte Verschiebung von Bildinhalten ermöglicht, um verschiedene inhaltsfreie Flächen, die bei der Darstellung unterschiedlicher Darstellungsskalierungen, Aspect Ratios oder Bildauflösungen von Inhalt und Wiedergabegerät auftreten können, zu einer oder mehreren größeren Flächen zusammenzufügen. So können z.B. zwei inhaltsfreie Flächen (sog. "Schwarze Balken") am linken und rechten oder oberen und unteren Bildschirmrand durch Verschiebung des inhaltsreichen Bildbereiches zu einer inhaltsfreien Fläche (sog. "Schwarzer Balken") am oberen oder unteren bzw. am linken oder rechten Bildschirmrand zusammengefügt werden.

Desweiteren beschreibt die Erfindung eine verbesserte Anordnung und ein verbessertes Verfahren, dass die Erkennung und intelligente Verarbeitung von inhaltsfreien Flächen ermöglicht, auch wenn diese als nicht inhaltsfrei codiert sind (z.B. wenn die sog. "Schwarzen Balken" im Videomaterial als Teil des Videoinhalts codiert sind) und eine entsprechende Erkennung, Verarbeitung und Anpassung von Parametern des visuellen oder audiovisuellen Materials, wie z.B. Darstellungsskalierung, Aspect Ratio oder Bildauflösung. Zum Beispiel kann so ein als 16:9 Aspect Ratio ausgewiesenes Videomaterial, dass aber seinerseits inhaltsfreie Flächen ("Schwarze Balken") am linken und rechten Bildschirmrand enthält, inhaltlich als 4:3 Aspect Ratio erkannt und dann mit seitlich verschobenem Bildinhalt und ergänzter kontextuell relevanter Zusatzinformation in der vormaligen (und nun zusammengefügter und damit vergrößerter) inhaltsfreien Fläche am Bildschirmrand erneut als 16:9 Aspect Ratio ausgewiesen werden und somit gesendet werden.

Die Verschmelzung von verschiedenen Technologien:. Eine optimierte Ausnutzung von Oberflächen verschiedener Endgeräte und zeitgleich eine verbesserte personalisierte Fernsehnutzung, z.B. einer Reisefernsehsendung. So ist eine Interaktion auf unterschiedlichen und verschiedensten Ebenen denkbar, bspw. zwischen Internet, TV-Services, TV-zentrischen oder AV-Inhalten.

Die verbesserte Anordnung und das verbesserte Verfahren wird nachfolgend anhand der Zeichnungen näher erläutert. Dabei zeigen:
- Figur 1: in schematischer Darstellung ein Architekturkonzept eines Systems
- Figur 2: ein Schema des Zusammenspiels von technischen Geräten zur Umwandlung eines Signals und ihrer Ausspielung auf einem oder mehreren externen Geräten
- Figur 3: in schematischer Darstellung ein System, welches gegenüber dem in Figur 1 gezeigten System modifiziert ist bzw. detaillierter auf das technische Verfahren eingeht

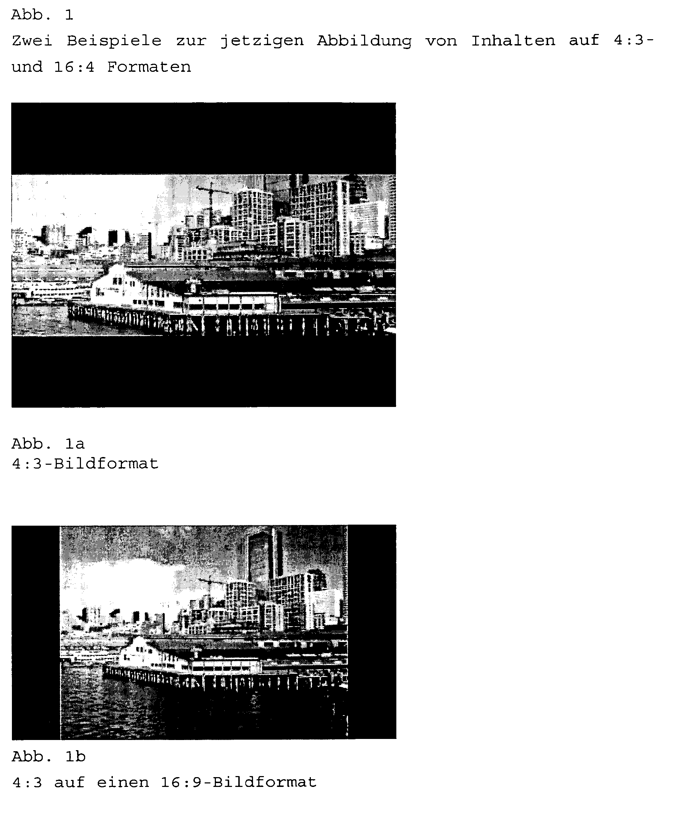

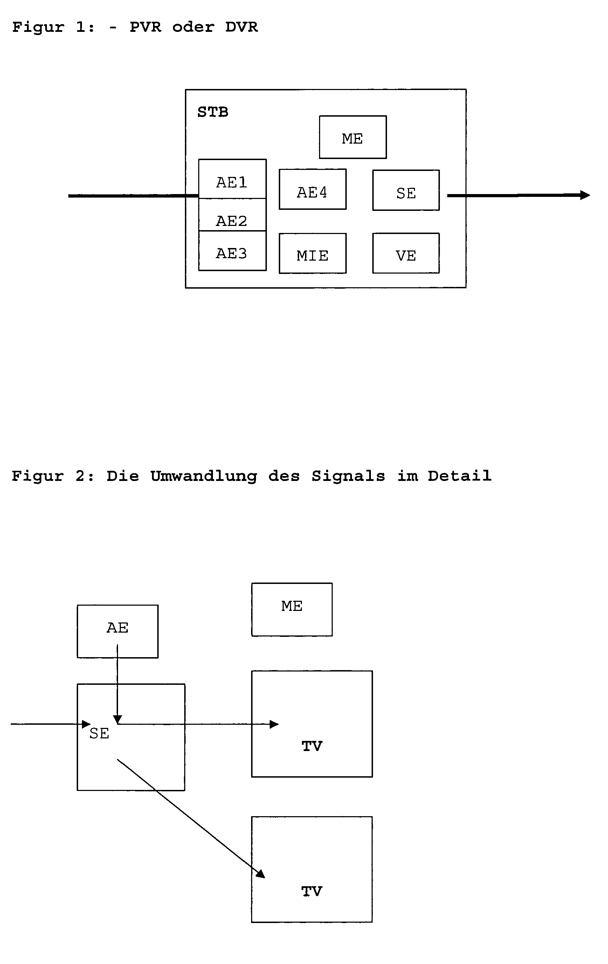

Figur 1 zeigt schematisch ein Architekturkonzept eines als (auch digitalen) Videorekorders (DVRs, PVRs) oder Set-Top-Box (STBs) ausgebildeten Systems zur freien Auswahl von Diensten zur Personalisierung von Fernsehprogrammen, AV-Inhalten oder anderen Mehrwertdiensten aus unterschiedlichen Distributionskanälen bezogenen Inhalten wie auch eine abstrakte Darstellung von technischen Elementen zur optischen Gestaltung und Verschiebung von Bildkomponenten. Die STB oder PVR beinhaltet folglich alle technischen Elemente zur Umwandlung von Signalen und sonstigen Elementen, die benötigt werden, um die zuvor beschriebenen Vorteile dieser Erfindung umzusetzen.

Die STB beinhaltet mehrere technische Komponente/Geräte, die die Umwandlung von Signalen umsetzt. Signal kommt herein und wird durch die verschiedenen Einheiten umgewandelt. Signal kommt umgewandelt heraus und wird entsprechend auf das Endgerät gespielt/übertragen.

Die Analyseeinheit 1 (AE1) ermittelt Informationen zur Nutzung des visuellen oder audiovisuellen Angebotes

Die Analyseeinheit 2 (AE2) ermittelt Informationen und Parameter zur Verfügbarkeit von Zusatzinhalten

Die Analyseeinheit 3 (AE3) ermittelt die Anzeigefähigkeit und Parameter (wie z.B. Darstellungsskalierung, Aspect Ratio, Bildauflösung) des Wiedergabegerätes (z.B. Fernseher, Monitor, Mobiltelefon)

Die Analyseeinheit 4 (AE4) ermittelt die Parameter der visuellen oder audiovisuellen Inhalte und des eintreffenden Signals, das bspw. durch die Skaliereinheit (SE) von einem 4:3-Format zu einem 16:9-Format umgewandelt wird und in diesem neuen Format auf ein Fernsehgerät oder mehrere Fernsehgeräten ausgespielt wird.

Die Managementeinheit (ME) steuert und kontrolliert den Gesamtprozess. Sie bezieht dabei u.a. folgende Parameter mit in den Gesamtprozess ein:
1. Informationen der Analyseeinheit 1 (AE1) zur Nutzung des audiovisuellen Angebotes
2. Informationen der Analyseeinheit 2 (AE2) zur Verfügbarkeit von Zusatzinhalten
3. Informationen der Analyseeinheit 3 (AE3) zu Parametern der Anzeigefähigkeit des Wiedergabegerätes
4. Informationen der Analyseeinheit 4 (AE4) zu Parametern der audiovisuellen oder visuellen Inhalte

Die Skaliereinheit (SE) skaliert das eintreffende Signal, das bspw. durch eine Entscheidung der Managementeinheit (ME) von einem 4:3-Format zu einem 16:9-Format umgewandelt wird und in diesem neuen Format auf ein Fernsehgerät oder mehrere Fernsehgeräten ausgespielt wird.

Die Verschiebeeinheit (VE) verschiebt auf Anforderung der Managementeinheit (ME) das Bild und kann so u.a. mehrere inhaltsfreie Flächen zu einer gemeinsamen größeren kombinieren.

Die Mischeinheit (MIE) mischt nun auf Anforderung der Managementeinheit (ME) Zusatzinformationen mit den visuellen oder audiovisuellen Informationen und nutzt für diese Zumischung die bereitgestellten und identifizierten inhaltsfreien Flächen.

Die Ausgabeeinheit (AE) gibt schließlich das neue Bildsignal (evtl. auch zusammen mit neuen oder ergänzten Parametern) aus.

Das dieser Erfindung zugrunde liegende System eignet sich u.a. zur Integration in Sende-, Weiterleitungs-, Empfangs- und Wiedergabegeräte für visuelle und audiovisuelle Inhalte.

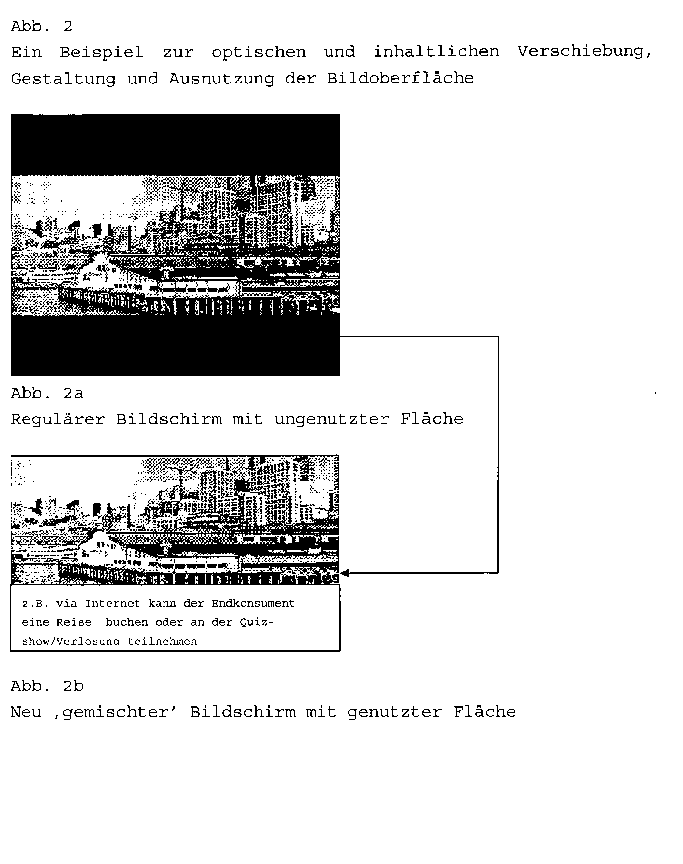

Figur 2 zeigt ein Schema des Zusammenspiels von technischen Geräten zur Umwandlung eines Signals und ihrer Ausspielung auf einem oder mehreren externen Geräten.

Die Analyseeinheit (AE) skaliert das eintreffende Signal, das durch die Managementeinheit (ME) umgewandelt wird und dann z.B. als 16: 9-Format auf das Fernsehgerät oder mehrere Fernsehgeräten ausgespielt wird.

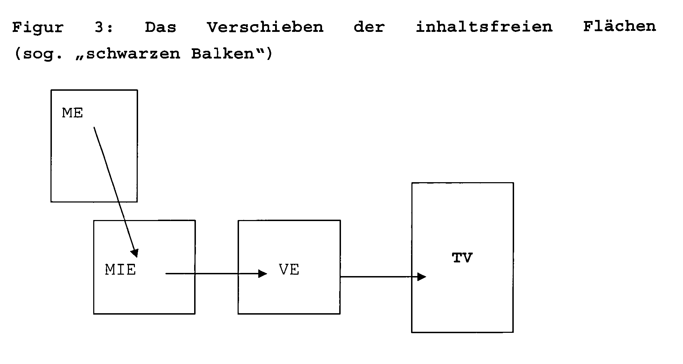

Figur 3 zeigt im Detail die Re-Skalierung und Verschiebung von Daten bzw. die Verschiebung von Inhalten. Die Skaliereinheit (SE) re-skaliert die eingehenden Daten/Informationen. Die Mischeinheit fügt die Informationen neu zusammen. Zuvor verschiebt die Verschiebeeinheit (VE) das Bild entsprechend der zugrunde liegenden Daten, so dass bspw. die "schwarzen Balken" - das Bildband oder die Bildbände - je nach Bedarf und Wunsch verschoben werden können.

Die Managementeinheit (ME) re-skaliert die eingehenden Daten/Informationen. Die Mischeinheit fügt die Informationen neu zusammen. Daraufhin verschiebt die Verschiebeeinheit (VE) das Bild entsprechend der zugrunde liegenden Daten.

### Liste der verwendeten Bezugszeichen

- STB: Settop-Box
- ME: Managementeinheit (auch Entscheidungseinheit)
- MIE: Mischeinheit
- VE: Verschiebeeinheit
- TV: Fernsehgerät/Bildschirm
- SE: Skaliereinheit
- AE: Analyseeinheit, ggf. bestehend aus mehreren Unter-Analyseeinheiten

## Patentansprüche

1. System zur Umwandlung eines Signals durch verschiedene Einheiten (AE, AE 1, AE 2, AE 3, AE 4, SE, ME, MIE, VE) und ihrer anschließenden Ausspielung/Übertragung auf ein oder mehrere Endgeräte zur einer verbesserten Vorrichtung und einem verbesserten Verfahren zur verbesserten Darstellung von Zusatzinhalten.

2. System nach einem der vorhergehenden Ansprüche **dadurch gekennzeichnet,**
**dass** es Inhaltsfreie Flächen erkennt, u.a. durch den Abgleich zwischen Format / Darstellungsskalierung / Aspect Ratio / Bildauflösung des Inhaltes und Format / Bildauflösung des Wiedergabegerätes mittels der Systemkomponenten AE 1, AE 2, AE 3, AE 4, SE, ME.

3. System nach einem der vorhergehenden Ansprüche **dadurch gekennzeichnet,**
**dass** es die Belegbarkeit von Inhaltsfreien Flächen ermittelt, **gekennzeichnet durch** die Systemkomponenten Analyseeinheiten (AE1, AE2, AE3, AE4) sowie Managementeinheit (ME).

4. System nach einem der vorhergehenden Ansprüche **dadurch gekennzeichnet,**
**dass** es die Verschiebung des Bildinhaltes und der inhaltsfreien Flächen ermöglicht, **gekennzeichnet durch** die Systemkomponenten Mischeinheit (MIE), Managementeinheit (ME) und Verschiebeeinheit (VE).

5. System nach einem der vorhergehenden Ansprüche **dadurch gekennzeichnet,**
**dass** es die Belegung der inhaltsfreien Flächen ermöglicht, **gekennzeichnet durch** die Systemkomponenten Mischeinheit (MIE), Managementeinheit (ME) und Verschiebeeinheit (VE).

6. System nach einem der vorhergehenden Ansprüche **dadurch gekennzeichnet,**
**dass** es die Verschiebung des Bildinhaltes, das Zusammenlegen von inhaltsfreien Flächen und die daran gekoppelte größerflächige Belegung der inhaltsfreien Flächen mit Zusatzinhalten ermöglicht, **gekennzeichnet durch** die Systemkomponenten Mischeinheit (MIE), Managementeinheit (ME) und Verschiebeeinheit (VE).

7. System nach einem der vorhergehenden Ansprüche **dadurch gekennzeichnet, dass**
zum Verschieben der inhaltfreien Flächen (sog. "schwarzen Balken") die Managementeinheit (ME) sowie eine Metadaten-Schnittstelle beinhaltet. Dies gilt auch für die anschließende Verschiebeeinheit (VE), die das Bild entsprechend der zugrunde liegenden Daten verschiebt und die Mischeinheit (MIE), die die Informationen bzw. Skaliereinheit (SE) neu zusammenfügt, so dass diese Metadaten-Schnittestelle Teil des Verfahrens zur verbesserten Vorrichtung und verbesserten Verfahren zur verbesserten Darstellung von Zusatzinhalten ist.

8. System nach einem der vorhergehenden Ansprüche **dadurch gekennzeichnet, dass**
die Metadaten-Schnittstellen zur Umwandlung durch eine Analyseeinheit (AE), die das eintreffende Signal skaliert, das wiederum durch die Managementeinheit (ME) umgewandelt wird und dann durch eine Skaliereinheit (SE) re-skaliert auf das Fernsehgerät oder mehrere Fernsehgeräten ausgespielt wird, ein Teil des Verfahrens zur verbesserten Vorrichtung und verbesserten Verfahren zur verbesserten Darstellung von Zusatzinhalten ist.

9. System nach einem der vorhergehenden Ansprüche **dadurch gekennzeichnet,**
**dass** es Inhaltsgefüllte Flächen erkennt, u.a. durch den Abgleich zwischen Format / Darstellungsskalierung / Aspect Ratio / Bildauflösung des Inhaltes und Format / Bildauflösung des Wiedergabegerätes mittels der Systemkomponenten AE 1, AE 2, AE 3, AE 4, SE, ME.

10. System nach einem der vorhergehenden Ansprüche **dadurch gekennzeichnet,**
**dass** es die Belegbarkeit von Inhaltsgefüllten Flächen ermittelt, **gekennzeichnet durch** die Systemkomponenten Analyseeinheiten (AE1, AE2, AE3, AE4) sowie Managementeinheit (ME).

11. System nach einem der vorhergehenden Ansprüche **dadurch gekennzeichnet,**
**dass** es Änderungen in der Darstellungsskalierung ermöglicht, z.B. durch die Verschiebung des Bildinhaltes und der inhaltsgefüllten Flächen ermöglicht durch Streckung, Stauchung oder Verschachtelung des Bildinhaltes und der inhaltsgefüllten Flächen, **gekennzeichnet durch** die Systemkomponenten Mischeinheit (MIE), Managementeinheit (ME) und Verschiebeeinheit (VE).

12. System nach einem der vorhergehenden Ansprüche **dadurch gekennzeichnet,**
**dass** es die Verschiebung, Verstauchung, Streckung oder Verschachtelung des Bildinhaltes oder die gefüllte Fläche, die Schaffung von neu befüllbaren Flächen mit Zusatzinhalten ermöglicht, **gekennzeichnet durch** die Systemkomponenten Mischeinheit (MIE), Managementeinheit (ME) und Verschiebeeinheit (VE).

## Geänderte Patentansprüche

### Geänderte Patentansprüche gemäss Regel 137(2) EPÜ.

**1.** System zur Umwandlung eines Signals aus einem ersten Kommunikations-Datennetz und seiner anschließenden Ausspielung und/oder Übertragung auf ein Endgerät oder mehrere Endgeräte und zur zur Darstellung von Zusatzinhalten auf dem Endgerät oder den mehreren Endgeräte, umfassend:
a. mehrere Analyseeinheiten (AE1, AE2, AE3, AE4)
b. eine Managementeinheit (ME) und
c. eine Mischeinheit (MIE),
**dadurch gekennzeichnet, dass** die Analyseeinheiten (AE1, AE2, AE3, AE4), die Mischeinheit (MIE) und die Managementeinheit (ME) dazu ausgelegt sind, inhaltsfreie Flächen zu erkennen und die inhaltsfreien Flächen mit Zusatzinhalten aus einem zweiten Kommunikations-Datennetz zu belegen.

**2.** System nach einem der vorhergehenden Ansprüche,
**dadurch gekennzeichnet, dass** die Analyseeinheiten (AE1, AE2, AE3, AE4) und die Managementeinheit (ME) dazu ausgelegt sind, die inhaltsfreien Flächen durch den Abgleich zwischen Format, Darstellungsskalierung, Aspect Ratio und Bildauflösung des Signals und dem Format und der Bildauflösung des Endgerätes oder der Endgeräte zu erkennen.

**3.** System nach einem der vorhergehenden Ansprüche,
**dadurch gekennzeichnet, dass** die Analyseeinheiten (AE1, AE2, AE3, AE4) und die Managementeinheit (ME) dazu ausgelegt sind, die Belegbarkeit von inhaltsfreien Flächen zu ermitteln.

**4.** System nach einem der vorhergehenden Ansprüche,
**gekennzeichnet durch** eine Verschiebeinheit (VE), wobei die Mischeinheit (MIE), die Managementeinheit (ME) und eine Verschiebeinheit (VE) dazu ausgelegt sind, den Bildinhalt und die inhaltsfreien Flächen zu verschieben.

**5.** System nach einem der vorhergehenden Ansprüche,
**gekennzeichnet durch** eine Verschiebeinheit (VE), wobei die Mischeinheit (MIE), die Managementeinheit (ME) und die Verschiebeeinheit (VE) dazu ausgelegt sind, mehrere inhaltsfreie Flächen zusammenzulegen und die zusammengelegten, großflächigeren inhaltsfreien Flächen mit den Zusatzinhalten zu belegen.

**6.** System nach einem der vorhergehenden Ansprüche,
**gekennzeichnet durch** eine Verschiebeinheit (VE), wobei zum Verschieben der inhaltfreien Flächen die Managementeinheit (ME), die Verschiebeeinheit (VE) und die Mischeinheit (MIE)eine Metadaten-Schnittstelle beinhalten.

**7.** System nach einem der vorhergehenden Ansprüche,
**dadurch gekennzeichnet, dass** die Analyseeinheiten (AE1, AE2, AE3, AE4) und die Managementeinheit (ME) dazu ausgelegt sind, die Belegbarkeit von inhaltsgefüllten Flächen zu ermitteln.

**8.** System nach einem der vorhergehenden Ansprüche,
**gekennzeichnet durch** eine Verschiebeinheit (VE), wobei die Mischeinheit (MIE), die Managementeinheit (ME) und die Verschiebeeinheit (VE) dazu ausgelegt sind, Änderungen in der Darstellungsskalierung **durch** die Verschiebung des Bildinhaltes von inhaltsgefüllten Flächen und/oder **durch** Streckung, Stauchung oder Verschachtelung des Bildinhaltes der inhaltsgefüllten Flächen durchzuführen.

**9.** System nach Anspruch 8,
**dadurch gekennzeichnet, dass** die Mischeinheit (MIE), die Managementeinheit (ME) und die Verschiebeeinheit (VE) dazu ausgelegt sind, durch die Verschiebung, Verstauchung, Streckung oder Verschachtelung des Bildinhaltes der inhaltsgefüllten Fläche neu mit Zusatzinhalten befüllbare Flächen zu schaffen.

**10.** Verfahren zur Umwandlung eines Signals aus einem ersten Kommunikations-Datennetz und seiner anschließenden Ausspielung und/oder Übertragung auf ein Endgerät oder mehrere Endgeräte und zur Darstellung von Zusatzinhalten auf dem Endgerät oder den mehreren Endgeräte,
**gekennzeichnet durch** die Schritte:
- Erkennen von inhaltsfreien Flächen und
- Belegen der inhaltsfreien Flächen mit Zusatzinhalten aus einem zweiten Kommunikations-Datennetz.
